# EUROPEAN PATENT SPECIFICATION

(11) **EP 2 641 928 B1**
(45) Date of publication and mention of the grant of the patent: **31.05.2017**
(21) Application number: 11841147.9
(22) Date of filing: 07.11.2011
(51) Int. Cl.: C08G 75/08, C08G 18/38, G02B 1/14

(54) **COMPOSITION FOR OPTICAL MATERIAL**
ZUSAMMENSETZUNG FÜR EIN OPTISCHES MATERIAL
COMPOSITION POUR MATÉRIAU OPTIQUE

(30) Priority: 17.11.2010 JP 2010256981
(43) Date of publication of application: 25.09.2013
(73) Proprietor: Mitsubishi Gas Chemical Company, Inc., Tokyo 100-8324 (JP)
(72) Inventor: TAKEMURA, Kouhei, Osaka-shi Osaka 551-0022 (JP); HORIKOSHI, Hiroshi, Osaka-shi Osaka 551-0022 (JP)
(74) Representative: Müller-Boré & Partner Patentanwälte PartG mbB
(86) International application number: PCT/JP2011/006205
(87) International publication number: WO 2012/066744

(56) References cited:
- EP-A1- 2 660 260
- WO-A1-2008/136401
- WO-A1-2010/073613
- JP-A- 2005 272 778
- JP-A- 2005 272 785
- JP-A- 2007 197 615
- JP-A- 2007 277 438
- JP-A- 2009 242 532
- JP-A- 2009 242 532
- JP-A- 2011 073 165
- US-A- 2 560 042

## Description

The present invention relates to a composition for an optical material and especially to a composition for an optical material, suitably used for optical materials such as plastic lens, prism, optical fiber, information recording substrate, filter and the like (plastic lens, in particular).

A plastic material has been increasingly used for various types of optical materials, in particular, for spectacle lenses because it is light-weight, highly flexible and easily dyed. An optical material, spectacle lens in particular, is required to exhibit in performances low specific gravity, high transparency, low-yellowness, high heat resistance, high strength and the like as physical properties thereof, as well as high refractive index and high Abbe's number as optical properties thereof. High refractive index can realize a thin lens and high Abbe's number reduces chromatic aberration of a lens. The higher refractive index, however, generally results in the lower Abbe's number in a lens. Therefore, studies have been made to enhance both refractive index and Abbe's number of a lens simultaneously. The most common approach among these studies is a method of using an episulfide compound as disclosed in the following Patent Literature 1.

A composition comprising an episulfide compound and a thiol compound as disclosed in the following Patent Literature 2 has been proposed as a composition using an episulfide compound, in terms of preventing yellowness. Further, a composition comprising an episulfide compound, a thiol compound and an isocyanate compound as disclosed in the following Patent Literature 3 has been proposed in terms of enhancing strength. Yet further, a composition comprising an episulfide compound and sulfur as disclosed in the following Patent Literature 4 has been proposed in terms of further enhancing refractive index. Yet further, the following Patent Literature 5 proposes a composition which combines the merits of the aforementioned respective compositions.

The following Patent Literature 6, on the other hand, proposes a technique of adding a halide compound of an element selected from group 13-16 elements in the long form periodic table to such a composition as described above to improve workability because the episulfide compound and the aforementioned compositions using it exhibit significantly high viscosity after addition of a polymerization catalyst thereto.

### Patent Literature

PTL 1: JP-A-H9-110979
PTL2: JP-A-H10-298287
PTL 3: JP-A-2001-131257
PTL 4: JP-A-2001-2783
PTL 5: JP-A-2002-122701
PTL 6: JP-A-2002-332350

Further, JP-A-2009-242532 discloses a method of manufacturing a resin composition for optical material which has high transparency and excellent yellowing resistance. JP-A-2007-197615 and JP-A-2007-277438 each discloses an optical material prepared by the addition of a thiol compound and an isocyanate compound to an episulfide compound. US 2,560,042 discloses the preparation of butyltin chlorides.

However, inhomogeneity called "stria" is often generated in polymers when a composition containing the aforementioned episulfide compound is cured through polymerization. A lens made of such a composition containing the episulfide compound as described above exhibits particularly severe striae when the lens has high optical power, i.e. a surface with high radius of curvature. A technique of suppressing such striae has been therefore strongly demanded.

In order to solve the aforementioned problem, an object of the present invention is to provide a composition for an optical material capable of suppressing generation of inhomogeneity called "stria" in polymerization, in particular, generation of striae in a plastic lens having high optical power or a surface with high radius of curvature.

In view of the situation as described above, the inventors of the present invention made a keen study and discovered a composition for an optical material, comprising a stabilizer, an episulfide compound, a polythiol compound, and a polymerization catalyst for the episulfide compound, wherein the stabilizer is mainly composed of dibutyltin dichloride and a mass ratio of dibutyltin dichloride to monobutyltin trichloride is 97.0/3.0 to 99.99/0.01, thereby solving the aforementioned problems and completing the present invention. Specifically, primary features of the present invention are as follows.
(1) A composition for an optical material, comprising: a stabilizer having a mass ratio (Bu₂SnCl₂/BuSnCl₃) of dibutyltin dichloride (Bu₂SnCl₂) to monobutyltin trichloride (BuSnCl₃) of 97.0/3.0 to 99.99/0.01, wherein a content of the dibutyltin dichloride is 99.99 mass% or less and a content of the monobutyltin trichloride is 0.01 mass% or higher; an episulfide compound; a polythiol compound; and a polymerization catalyst for the episulfide compound.
(2) The composition for the optical material of (1) above, wherein the stabilizer contains dibutyltin dichloride by at least 97.0 mass% and at most 99.99 mass%, and monobutyltin trichloride by 0.01 mass% or higher and 3.0 mass% or less.
(3) The composition for the optical material of (1) or (2) above, further comprising a polyisocyanate compound.
(4) The composition for the optical material of any of (1) to (3) above, further comprising sulfur.

According to the present invention, it is possible to provide a composition for an optical material capable of suppressing generation of inhomogeneity called "stria" in polymerization, in particular, generation of striae in a plastic lens having high optical power or a surface with high radius of curvature, which suppressions are difficult to achieve by the prior art.

The episulfide compound for use in the composition for the optical material of the present invention may be any of the compounds each having episulfide group, and specific examples of these episulfide compound will be described below by classifying them into three categories: those having chain-like aliphatic skeletons; those having aliphatic cyclic skeletons; and those having aromatic skeletons.

Examples of the episulfide compound having a chain-like aliphatic skeleton include a compound represented by the following general formula (1): 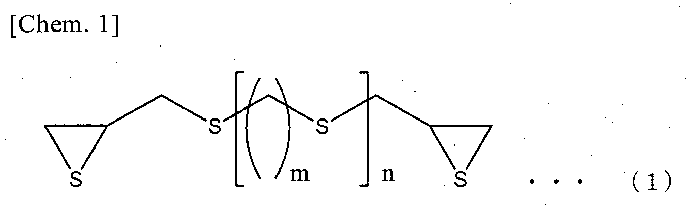 In the formula (1), "m" represents an integer in the range of 0 to 4, and "n" represents an integer in the range of 0 to 2.

Examples of the episulfide compound having an aliphatic cyclic skeleton include a compound represented by the following general formula (2) and a compound represented by the following general formula (3): 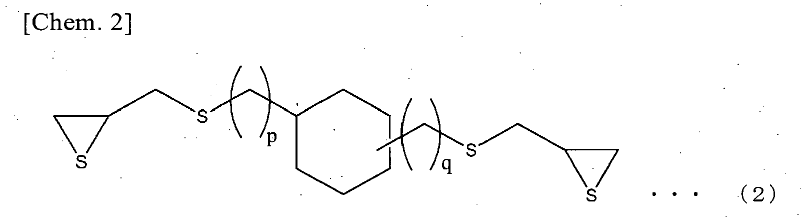 In the formula (2), "p" and "q" each independently represent an integer in the range of 0 to 4. 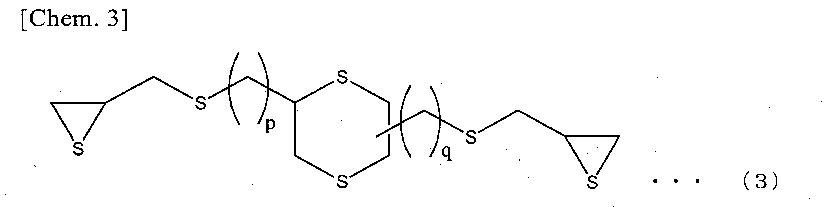 In the formula (3), "p" and "q" each independently represent an integer in the range of 0 to 4.

Examples of the episulfide compound having an aromatic cyclic skeleton include a compound represented by the following general formula (4): 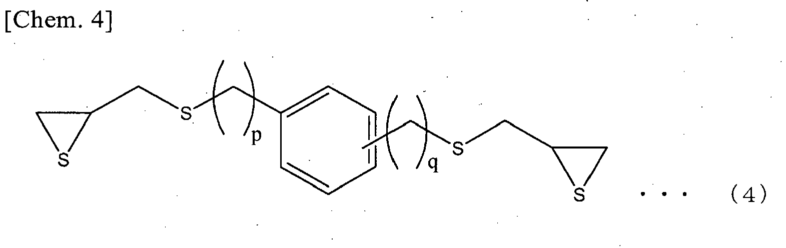 In the formula (4), "p" and "q" each independently represent an integer in the range of 0 to 4.

The episulfide compound having a chain-like aliphatic skeleton represented by the general formula (1) is the most preferable among the aforementioned three categories, and specific examples of the formula (1) episulfide compound include bis(β-epithiopropyl)sulfide, bis(β-epithiopropyl)disulfide, bis(β-epithiopropyl)trisulfide, bis(β-epithiopropylthio)methane, 1,2-bis(β-epithiopropylthio)ethane, 1,3-bis(β-epithiopropylthio)propane, 1,4-bis(β-epithiopropylthio)butane, and bis(β-epithiopropylthioethyl)sulfide. Among these specific examples, bis(β-epithiopropyl)sulfide (n = 0 in the formula (1)) arid bis(β-epithiopropyl)disulfide (m = 0 and n = 1 in the formula (1)) are particularly preferable, and bis(β-epithiopropyl)sulfide (n = 0 in the formula (1)) is the most preferable.

The content of the aforementioned episulfide compound with respect to the total amount of the composition for the optical material is generally in the range of 40 mass% to 95 mass%, preferably in the range of 50 mass% to 90 mass%, and more preferably in the range of 60 mass% to 85 mass%.

Adding dibutyltin dichloride as a stabilizer to a composition including the aforementioned episulfide compound suppresses increase in viscosity of the composition after addition of the polymerization catalyst thereto in curing process through polymerization, so that it can improve workability of the composition.

Dibutyltin dichloride is generally obtained by a reaction between a Grignard reagent and tin tetrachloride. It should be noted in this connection that dibutyltin dichloride cannot be exclusively obtained and monobutyltin trichloride is inevitably mixed thereinto because the reaction between a Grignard reagent and tin tetrachloride is a successive reaction.

nRMgX + SnCl₄ → RₙSₙCl₄₋ₙ + nMgClX

Accordingly, a purification step for removing monobutyltin trichloride thus mixed, from dibutyltin dichloride, is necessitated. Examples of the technique for the purification step include distillation, recrystallization, reprecipitation, chromatography separation, adsorbent treatment, ion exchange resin treatment, and the like. Distillation is preferable among these examples. Distillation, although it may be carried out under either normal or decreased pressure, is preferably implemented under a reduced pressure in the range of 0.01 Torr to 100 Torr and more preferably in the range of 0.1 Torr to 50 Torr. Distillation temperature, although it is not particularly restricted as long as the products are distillated without being decomposed, is preferably in the range of 50°C to 190°C and more preferably in the range of 100°C to 180°C.

The stabilizer for use in the composition for the optical material of the present invention exhibits a superior effect intended in the present invention when the mass ratio (Bu₂SnCl₂/BuSnCl₃) of dibutyltin dichloride (Bu₂SnCl₂) to monobutyltin trichloride (BuSnCl₃) is in the range of 97.0/3.0 to 99.99/0.01, preferably in the range of 99.0/1.0 to 99.99/0.01, and more preferably in the range of 99.5/0.5 to 99.99/0.01. Further, the stabilizer for use in the composition for the optical material of the present invention preferably contains dibutyltin dichloride by at least 97.0 mass% and monobutyltin trichloride by 3.0 mass% or less, more preferably contains dibutyltin dichloride by at least 99.0 mass% and monobutyltin trichloride by 1.0 mass% or less, and most preferably contains dibutyltin dichloride by at least 99.5 mass% and monobutyltin trichloride by 0.5 mass % or less. The content of dibutyltin dichloride in the stabilizer is 99.99 mass% or less and the content of monobutyltin trichloride in the stabilizer is 0.01 mass% or higher.

The amount of the stabilizer to be added, with respect to the total amount of the composition for the optical material, is generally in the range of 0.0001 mass% to 5.0 mass%, preferably in the range of 0.0005 mass% to 3.0 mass%, and more preferably in the range of 0.001 mass% to 2.0 mass%.

Examples of the polymerization catalyst for the episulfide compound for use in the composition for the optical material of the present invention include amine, onium salt and phosphine compound. Specific examples of the polymerization catalyst include amine, quaternary ammonium salt, quaternary phosphonium salt, tertiary sulfonium salt, secondary iodonium salt, and phosphine compound. Among these specific examples, quaternary ammonium salt, quaternary phosphonium salt and phosphine compound, each having good compatibility with the composition of the present invention, are preferable, and quaternary ammonium salt and quaternary phosphonium salt are particularly preferable. Specific examples of these particularly preferable compounds as the polymerization catalysts include: quaternary ammonium salts such as tetra-n-butylammonium bromide, tetraphenylammonium bromide, triethylbenzylammonium chloride, cetyldimethylbenzylammonium chloride, and 1-n-dodecylpyridinium chloride; quaternary phosphonium salts such as tetra-n-butylphosphonium bromide and tetraphenylphosphonium bromide; and phosphine compounds such as triphenylphosphine. Triethylbenzylammonium chloride and tetra-n-butylphosphonium bromide are particularly preferable among these specific examples. These polymerization catalysts may be used either solely or in combination of two or more types.

The amount of the polymerization catalyst to be added, with respect to the total amount of the composition, although it varies depending on types of components of the composition, mixture ratios of the components, and the curing method by polymerization, is generally not less than 0.001 mass% but not more than 5 mass%, preferably not less than 0.01 mass% but not more than 1 mass%, and most preferably not less than 0.01 mass% but not more than 0.5 mass%. When the amount of the polymerization catalyst to be added exceeds 5 mass%, refractive index and heat resistance of a resulting cured material may be deteriorated and the cured material may be imparted with unwanted color. While when the amount of the polymerization catalyst to be added is less than 0.001 mass%, the composition is not sufficiently cured and thus heat resistance of the resulting cured material may be insufficient.

The polythiol compound for use in the composition for the optical material of the present invention may be any of the compounds each having plural thiol groups, and specific examples of the polythiol compound include methanedithiol, 1,2-dimercaptoethane, 2,2-dimercaptopropane, 1,3-dimercaptopropane, 1,2,3-trimercaptopropane, 1,4-dimercaptobutane, 1,6-dimercaptohexane, bis(2-mercaptoethyl)sulfide, 1,2-bis(2-mercaptoethylthio)ethane, 1,5-dimercapto-3-oxapentane, 1,8-dimercapto-3,6-dioxaoctane, 2,2-dimethylpropane-1,3-dithiol, 3,4-dimethoxybutane-1,2-dithiol, 2-mercaptomethyl-1,3-dimercaptopropane, 2-mercaptomethyl-1,4-dimercaptopropane, 2-(2-mercaptoethylthio)-1,3-dimercaptopropane, 1,2-bis(2-mercaptoethylthio)-3-mercaptopropane, 1,1,1-tris(mercaptomethyl)propane, tetrakis(mercaptomethyl)methane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,3,3-tetrakis(mercaptomethylthio)propane, ethylene glycol bis(2-mercaptoacetate), ethylene glycol bis(3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), 1,1-dimercaptocyclohexane, 1,2-dimercaptocyclohexane, 1,3-dimercaptocyclohexane, 1,4-dimercaptocyclohexane, 1,3-bis(mercaptomethyl)cyclohexane, 1,4-bis(mercaptomethyl)cyclohexane, 2,5-bis(mercaptomethyl)-1,4-dithiane,2,5-bis(mercaptoethyl)-1,4-dithiane, 1,2-bis(mercaptomethyl)benzene, 1,3-bis(mercaptomethyl)benzene, 1,4-bis(mercaptomethyl)benzene, bis(4-mercaptophenyl)sulfide, bis(4-mercaptophenyl)ether, 2,2-bis(4-mercaptophenyl)propane, bis(4-mercaptomethylphenyl)sulfide, bis(4-mercaptomethylphenyl)ether, 2,2-bis(4-mercaptomethylphenyl)propane, and the like. It should be noted that the polythiol compounds for use in the composition for the optical material of the present invention are not restricted to the specific examples described above. Further, these polythiol compounds may be used either solely or in combination of two or more types.

Among the aforementioned specific examples of the polythiol compounds, preferable ones are bis(2-mercaptoethyl)sulfide, pentaerythritol tetrakis(2-mercaptoacetate), pentaerythritol tetrakis(3-mercaptopropionate), 2,5-bis(mercaptomethyl)-1,4-dithiane, 1,2-bis(2-mercaptoethylthio)-3-mercaptopropane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,3,3-tetrakis(mercaptomethylthio)propane, 1,3-bis(mercaptomethyl)benzene, and 1,4-bis(mercaptomethyl)benzene, and more preferable ones are bis(2-mercaptoethyl)sulfide, pentaerythritol tetrakis(2-mercaptoacetate), pentaerythritol tetrakis(3-mercaptopropionate), and 1,3-bis(mercaptomethyl)benzene. The most preferable polythiol compounds are bis(2-mercaptoethyl)sulfide and 1,3-bis(mercaptomethyl)benzene.

The amount of the polythiol compound to be added, with respect to the total amount of the composition for the optical material, is generally in the range of 0.1 mass% to 40 mass%, preferably in the range of 0.5 mass% to 30 mass%, and more preferably in the range of 1 mass% to 20 mass%.

The composition for the optical material of the present invention preferably further contains a polyisocyanate compound. The polyisocyanate compound may be any of the compounds each having plural isocyanate groups, and specific examples of the polyisocyanate compound include: polyisocyanate compounds such as diethylene diisocyanate, tetramethylene diisocyanate, hexamethylene diisocyanate, trimethylhexamethylene diisocyanate, cyclohexane diisocyanate, 1,3-bis(isocyanatomethyl)cyclohexane, 1,4-bis(isocyanatomethyl)cyclohexane, isophorone diisocyanate, 2,6-bis(isocyanatomethyl)decahydronaphthalene, lysine triisocyanate, 2,4-tolylene diisocyanate, 2,6-tolylene diisocyanate, o-tolidine diisocyanate, 4,4'-diphenylmethane diisocyanate, 4,4'-diphenylether diisocyanate, 3-(2'-isocyanatecyclohexyl)propylisocyanate, tris(phenyl isocyanate)thiophosphate, isopropylidene bis(cyclohexyl isocyanate), 2,2'-bis(4-isocyanatophenyl)propane, triphenylmethane triisocyanate, bis(diisocyanatotolyl)phenylmethane, 4,4',4"-triisocyanate-2,5-dimethoxyphenylamine, 3,3'-dimethoxybenzidine-4,4'-diisocyanate, 1,3-phenylene diisocyanate, 1,4-phenylene diisocyanate, 4,4'-diisocyanatobiphenyl, 4,4'-diisocyanato-3,3'-dimethylbiphenyl, dicyclohexylmethane-4,4'-diisocyanate, 1,1'-methylene bis(4-isocyanatobenzene), 1,1'-methylene bis(3-methyl-4-isocyanatobenzene), m-xylylene diisocyanate, p-xylylene diisocyanate, 1,3-bis(1-isocyanato-1-methylethyl)benzene, 1,4-bis(1-isocyanato-1-methylethyl)benzene, 1,3-bis(2-isocyanato-2-propyl)benzene, 2,6-bis(isocyanatomethyl)naphthalene, 1,5-naphthalene diisocyanate, bis(isocyanatomethyl)tetrahydrodicyclopentadiene, bis(isocyanatomethyl)dicyclopentadiene, bis(isocyanatomethyl)tetrahydrothiophene, bis(isocyanatomethyl)norbornene, bis(isocyanatomethyl)adamantane, dimer acid diisocyanate, 1,3,5-tri(1-isocyanatohexyl)isocyanuric acid, thiodiethyl diisocyanate, thiodipropyl diisocyanate, thiodihexyl diisocyanate, bis[(4-isocyanatomethyl)phenyl]sulfide, 2,5-diisocyanate-1,4-dithiane, 2,5-diisocyanatomethyl-1,4-dithiane, 2,5-diisocyanatomethyl thiophene, dithiodiethyl diisocyanate, dithiodipropyl diisocyanate; and compounds obtained by substituting at least a portion of each isocyanate group of the aforementioned polyisocyanate compounds with isothiocyanate group. Further, examples of the aforementioned polyisocyanate compounds include dimers and cyclic trimers obtained by biuret type reactions, isocyanate compounds as alcohol or thiol adducts, and the like. The polyisocyanate compounds which can be used for the composition for the optical material of the present invention are not restricted to the specific examples described above. Further, these polyisocyanate compounds may be used either solely or in combination of two or more types.

Among the aforementioned specific examples, preferable polyisocyanate compounds are 1,3-bis(isocyanatomethyl)cyclohexane, m-xylylene diisocyanate, bis(isocyanatomethyl)norbornene, 2,5-diisocyanatomethyl-1,4-dithiane and 1,3-bis(1-isocyanato-1-methylethyl)benzene, and the most preferable polyisocyanate compound is m-xylylene diisocyanate.

The amount of the polyisocyanate compound to be added, with respect to the total amount of the composition for the optical material, is generally in the range of 0.1 mass% to 30 mass%, preferably in the range of 0.5 mass% to 20 mass%, and more preferably in the range of 1 mass% to 15 mass%.

The composition for the optical material of the present invention preferably further contains sulfur. In a case where the composition for the optical material of the present invention contains sulfur, the amount of sulfur to be added, with respect to the total amount of the composition for the optical material, is generally in the range of 0.01 mass% to 40 mass%, preferably in the range of 0.1 mass% to 30 mass%, and more preferably in the range of 0.5 mass% to 25 mass%.

It is of course acceptable to further improve practical performances of a resulting optical material obtained by curing through polymerization of the composition for the optical material of the present invention, by adding known additives such as antioxidant, ultraviolet absorber, bluing agent, and the like to the composition.

Preferable examples of the antioxidant include phenol derivatives. Specifically, preferable antioxidants are polyhydric phenols and halogen-substituted phenols, more preferable antioxidants are catechol, pyrogallol and alkyl-substituted catechols, and most preferable antioxidants are catechol and pyrogallol.

Preferable examples of the UV protective agent include benzotriazole-based compounds. Specific examples of benzotriazole compounds as the particularly preferable UV protective agent include 2-(2-hydroxy-5-methylphenyl)-2H-benzotriazole, 5-chloro-2-(3,5-di-tert-butyl-2-hydroxyphenyl)-2H-benzotriazole, 2-(3-tert-butyl-2-hydroxy-5-methylphenyl)-5-chloro-2H-benzotriazole, 2-(3,5-di-tert-pentyl-2-hydroxyphenyl)-2H-benzotriazole, 2-(3,5-di-tert-butyl-2-hydroxyphenyl)-2H-benzotriazole, 2-(2-hydroxy-4-octyloxyphenyl)-2H-benzotriazole, and 2-(2-hydroxy-5-tert-octylphenyl)-2H-benzotriazole.

Preferable examples of the bluing agent include anthraquinone-based compounds.

In a case where the composition for the optical material of the present invention tends to too easily come off from a mold during the polymerization process, it is acceptable to controllably improve adhesion properties between a cured material obtained by polymerization and the mold by externally applying a known adhesion-improving agent thereto and/or adding a known adhesion-improving agent to the composition in advance. Examples of the adhesion-improving agent include known silane coupling agents, titanate compounds, and the like. These adhesion-improving agents may be used either solely or in combination of two or more types. In a case where the composition for the optical material of the present invention contains an adhesion-improving agent, the amount of the adhesion-improving agent to be added, with respect to the total amount of the composition for the optical material, is generally in the range of 0.0001 mass% to 5 mass%.

Alternatively, in a case where the composition for the optical material of the present invention tends to stick to a mold after polymerization, it is acceptable to improve mold-release properties of a cured material obtained by the polymerization, from the mold, by externally applying a known mold release agent thereto and/or adding a known mold release agent to the composition in advance. Examples of the mold release agent include fluorine-based nonionic surfactant, silicon-based nonionic surfactant, phosphate ester, acid phosphate ester, oxyalkylene type acid phosphate ester, alkali metal salt of acid phosphate ester, alkali metal salt of oxyalkylene type acid phosphate ester, metal salt of higher fatty acid, higher fatty acid ester, paraffin, wax, higher aliphatic amide, higher aliphatic alcohol, polysiloxane compounds, aliphatic amine ethylene oxide adducts, and the like. These mold release agents may be used either solely or in combination of two or more types. In a case where the composition for the optical material of the present invention contains a mold release agent, the amount of the mold release agent to be added, with respect to the total amount of the composition for the optical material, is generally in the range of 0.0001 mass% to 5 mass%.

A method for manufacturing an optical material by curing through polymerization of the composition for the optical material of the present invention will be described further in detail hereinafter. The respective composition components and the additives such as antioxidant, ultraviolet absorbent, polymerization catalyst, radical polymerization initiator, adhesion-improving agent, and mold release agent described above, i.e. the raw materials, may be either mixed all together simultaneously by stirring them within the same one container, or mixed one by one in a stepwise manner, or first classified into several groups and mixed together under each group so that the mixtures of the respective groups are eventually mixed together in the same one container. The respective raw materials and the auxiliary materials may be mixed in any order. Temperature and time in/for the mixing may be flexibly set so that they at least ensure conditions under which the respective components of the composition are sufficiently mixed.

In a case where sulfur is used, it is preferable to make the episulfide compound react with sulfur in advance. Conditions of this preparatory reaction are preferably -10°C to 120°C for 0.1 hour to 240 hours, more preferably 0°C to 100°C for 0.1 hour to 120 hours, and most preferably 20°C to 80°C for 0.1 hour to 60 hours. Use of a catalyst is effective in terms of facilitating the aforementioned preparatory reaction. Preferable examples of the catalyst include 2-mercapto-1-methylimidazole, triphenylphosphine, 3,5-dimethylpyrazole, N-cyclohexyl-2-benzothiazolyl sulfinamide, dipentamethylene thiuram tetrasulfide, tetrabutylthiuram disulfide, tetraethylthiuram disulfide, 1,2,3-triphenylguanidine, 1,3-diphenylguanidine, 1,1,3,3-tetramethylene guanidine, aminoguanidineurea, trimethylthiourea, tetraethylthiourea, dimethylethylthiourea, zinc dibutyldithiocarbamate, zinc dibenzyldithiocarbamate, zinc diethyldithiocarbamate, zinc dimethyldithiocarbamate, pipecolium pipecolyldithiocarbamate, and the like. Further, preferably at least 10%, more preferably at least 20% of sulfur ("100%" represents sulfur prior to the reaction in this connection) has been consumed by the preparatory reaction. The preparatory reaction may be carried out under any atmosphere, e.g. ambient air or inert gas such as nitrogen at normal pressure or increased/reduced pressure in a sealed environment. It is acceptable to employ a liquid chromatography, a refractometer, and the like to detect progress of the preparatory reaction.

The composition for the optical material is preferably subjected to degassing treatment prior to curing process in the present invention. The degassing treatment is carried out at a reduced pressure either prior to or simultaneous with or after mixing of: the relevant compounds which can be reacted with a part or all of the composition components; the polymerization catalyst; and the additives. Preferably, the degassing treatment is carried out either simultaneous with or after the mixing at a reduced pressure. Regarding treatment conditions, the treatment is to be carried out under reduced pressure selected in the range of 0.001 torr to 50 torr at temperature in the range of 0°C to 100°C for a period in the range of 1 minute to 24 hours. The reduced pressure is preferably in the range of 0.005 torr to 25 torr, more preferably in the range of 0.01 torr to 10 torr, and may be changed within these ranges during the degassing treatment. The degassing time is preferably in the range of 5 minutes to 18 hours and more preferably in the range of 10 minutes to 12 hours. The temperature during the degassing treatment is preferably in the range of 5°C to 80°C, more preferably in the range of 10°C to 60°C, and may be changed within these ranges during the degassing treatment. Facilitating displacements of interface of the composition for resin production by stirring, blowing of gas, ultrasonic vibrations, and the like during the degassing treatment is a preferable operation in terms of enhancing a degassing effect. Components removed by the degassing treatment are mainly gases such as hydrogen sulfide remaining in the composition and low-boiling point substances such as low-molecular weight thiols. However, types of them are not particularly restricted unless removal thereof disturbs the effect to be demonstrated in the present invention.

Filtering either the composition for the optical material or the respective raw materials prior to mixing, through a filter with a pore size of 0.05 µm to 10 µm or so for purification, to remove impurities is preferable in terms of further improving quality of the optical material of the present invention.

The optical material targeted by the present invention can be manufactured by: charging the composition for the optical material thus obtained in a mold made of glass or metal; heating the composition or irradiating the composition with activation energy ray such as ultraviolet, so that a curing reaction through polymerization of the composition proceeds; and releasing a resulting cured material from the mold. Preferably, the composition for the optical material is polymerized and cured by heating. In this case, curing time is generally in the range of 0.1 hour to 200 hours and preferably in the range of 1 hour to 100 hours. Curing temperature is generally in the range of -10°C to 160°C and preferably in the range of -10°C to 140°C. Polymerization can be carried out by holding the predetermined polymerization temperature for the predetermined time, heating at heating rate of 0.1°C to 100°C/hour, and cooling at cooling rate of 0.1°C to 100°C/hour or any combination thereof. It is preferable to subject a cured material to annealing treatment at temperature in the range of 50°C to 150°C for 10 minutes to 5 hours or so, after completion of the polymerization, in terms of relieving strains in the optical material of the present invention. The cured material may further be subjected to surface treatments such as dyeing, provision of hard coating and/or impact resistant coating, antireflection treatment, anti-fogging treatment, and the like according to necessity.

### EXAMPLES

The present invention will be described in detail by following Examples, without being particularly restricted thereto. Curing through polymerization and subsequent evaluation of the results were carried out by the methods described below, respectively.

### (Method for evaluating stria)

Ten lenses each having a lens diameter of 75 mm and an optical power of +10D were prepared and observed visually according to the Schlieren method. "⊚" means that all of the ten lenses were free of stria, "○" means that nine lenses were free of stria, "Δ" means that eight or seven lenses were free of stria, and " × " means that six or less lenses were free of stria. One evaluated as "Δ" or better passed the criteria.

### (Polymerization method A)

An optical material was obtained by: preparing a composition including 77 parts by mass of bis(β-epithiopropyl)sulfide, 14 parts by mass of 1,3-bis(mercaptomethyl)benzene and 9 parts by mass of 1.,3-bis(1-isocyanato-1-methylethyl)benzene; adding 0.2 part by mass of tetrabutylphosphonium bromide as a polymerization catalyst and 0.1 part by mass of stabilizer composed of dibutyltin dichloride and monobutyltin trichloride to the composition; mixing them uniformly at the room temperature; subjecting the mixture to degassing treatment; charging it into a mold; heating it from 20°C to 100°C over 20 hours to effect curing through polymerization; and releasing a resulting cured material from the mold.

### (Polymerization method B)

An optical material was obtained by: first adding 0.5 part by mass of mercapto methylimidazole to 78 parts by mass of bis(β-epithiopropyl)sulfide and 14 parts by mass of sulfur to effect a preparatory reaction of these components at 60°C; cooling the mixture to 20°C after completion of the preparatory reaction; adding to the mixture a mixed solution of 7 parts by mass of bis(2-mercaptoethyl)sulfide, 0.2 part by mass of stabilizer composed of dibutyltin dichloride and monobutyltin trichloride, and 0.03 part by mass of triethylbenzylammonium chloride as a polymerization catalyst and uniformly mixing them; subjecting the mixture to degassing treatment; charging it into a mold and heating it from 20°C to 100°C over 20 hours to effect curing through polymerization; and releasing a resulting cured material from the mold.

### (Polymerization method C)

An optical material was obtained by: preparing a composition including 80 parts by mass of bis(β-epithiopropyl)sulfide, 1 part by mass of sulfur, 12 parts by mass of pentaerythritol tetramercaptopropionate and 7 parts by mass of m-xylylene diisocyanate; adding 0.1 part by mass of tetrabutylphosphonium bromide as a polymerization catalyst and 0.05 part by mass of stabilizer composed of dibutyltin dichloride and monobutyltin trichloride to the composition; mixing them uniformly at the room temperature; subjecting the mixture to degassing treatment; charging it into a mold; heating it from 20°C to 100°C over 20 hours to effect curing through polymerization; and releasing a resulting cured material from the mold.

### (Preparation of stabilizer)

Stabilizers having a monobutyltin trichloride content of 0.4 mass%, 0.9 mass% or 2.8 mass% were prepared by subjecting a stabilizer composed of 94.0 mass% of dibutyltin dichloride and 6.0 mass% of monobutyltin trichloride to distillation under decreased pressure of 0.1 Torr to 50 Torr at temperature of 50°C to 200°C for 0.5 hour to 48 hours (contents were analyzed by using a gas chromatography).

### (Example 1)

A composition using a stabilizer having contents of dibutyltin dichloride: 99.6 mass% and monobutyltin trichloride: 0.4 mass% was cured according to the polymerization method A. The result regarding stria was good, i.e. "⊚". The results are summarized in Table 1.

### (Examples 2 and 3)

Each composition using a stabilizer having contents of dibutyltin dichloride: 99.6 mass% and monobutyltin trichloride: 0.4 mass% was cured according to the polymerization method as shown in Table 1. The results are shown in Table 1.

### (Examples 4 to 6)

Each composition using a stabilizer having contents of dibutyltin dichloride: 99.1 mass% and monobutyltin trichloride: 0.9 mass% was cured according to the polymerization method as shown in Table 1. The results are shown in Table 1.

### (Examples 7 to 9)

Each composition using a stabilizer having contents of dibutyltin dichloride: 97.2 mass% and monobutyltin trichloride: 2.8 mass% was cured according to the polymerization method as shown in Table 1. The results are shown in Table 1.

### (Comparative Examples 1 to 3)

Each composition using a stabilizer having contents of dibutyltin dichloride: 94.0 mass% and monobutyltin trichloride: 6.0 mass% was cured according to the polymerization method as shown in Table 1. The results are shown in Table 1.

**[Table 1]**

| Example | Bu₂SnCl₂/ BuSnCl₃ (mass ratio) | Content of monobutyltin trichloride in stabilizer (mass%) | Polymerization method | Stria |
|---|---|---|---|---|
| Example 1 | 99.6/0.4 | 0.4 | A | ⊚ |
| Example 2 | 99.6/0.4 | 0.4 | B | ⊚ |
| Example 3 | 99.6/0.4 | 0.4 | C | ⊚ |
| Example 4 | 99.1/0.9 | 0.9 | A | ○ |
| Example 5 | 99.1/0.9 | 0.9 | B | ○ |
| Example 6 | 99.1/0.9 | 0.9 | C | ○ |
| Example 7 | 97.2/2.8 | 2.8 | A | Δ |
| Example 8 | 97.2/2.8 | 2.8 | B | Δ |
| Example 9 | 97.2/2.8 | 2.8 | C | Δ |
| Comp. Example 1 | 94.0/6.0 | 6.0 | A | × |
| Comp. Example 2 | 94.0/6.0 | 6.0 | B | × |
| Comp. Example 3 | 94.0/6.0 | 6.0 | C | × |

It is understood from the results shown in Table 1 that generation of stria can be well suppressed by using a stabilizer having a mass ratio of dibutyltin dichloride to monobutyltin trichloride in the range of 97.0/3.0 to 99.99/0.01.

## Claims

1. A composition for an optical material, comprising:
a stabilizer having a mass ratio of dibutyltin dichloride to monobutyltin trichloride of 97.0/3.0 to 99.99/0.01, wherein a content of the dibutyltin dichloride is 99.99 mass% or less and a content of the monobutyltin trichloride is 0.01 mass% or higher;
an episulfide compound;
a polythiol compound; and
a polymerization catalyst for the episulfide compound.

2. A composition for an optical material according to claim 1, wherein the stabilizer contains dibutyltin dichloride by at least 97.0 mass% and at most 99.99 mass%, and monobutyltin trichloride by 0.01 mass% or higher and 3.0 mass% or less.

3. A composition for an optical material according to claim 1 or 2, further comprising a polyisocyanate compound.

4. A composition for an optical material according to any of claims 1 to 3, further comprising sulfur.

## Patentansprüche

1. Zusammensetzung für ein optisches Material, umfassend:
ein Stabilisierungsmittel, das ein Massenverhältnis von Dibutylzinndichlorid zu Monobutylzinntrichlorid von 97,0/3,0 bis 99,99/0,01 aufweist, wobei ein Gehalt von dem Dibutylzinndichlorid 99,99 Massen% oder weniger beträgt und ein Gehalt von dem Monobutylzinntrichlorid 0,01 Massen% oder höher beträgt;
eine Episulfidverbindung;
eine Polythiolverbindung; und
einen Polymerisationskatalysator für die Episulfidverbindung.

2. Zusammensetzung für ein optisches Material nach Anspruch 1, wobei das Stabilisierungsmittel mindestens 97,0 Massen% und höchstens 99,99 Massen% Dibutylzinndichlorid und 0,01 Massen% oder höher und 3,0 Massen% oder weniger Monobutylzinntrichlorid enthält

3. Zusammensetzung für ein optisches Material nach Anspruch 1 oder 2, ferner umfassend eine Polyisocyanatverbindung.

4. Zusammensetzung für ein optisches Material nach einem der Ansprüche 1 bis 3, ferner umfassend Schwefel.

## Revendications

1. Composition pour un matériau optique, comprenant :
un stabilisateur ayant un rapport en masse de dichlorure de dibutylétain par rapport à du trichlorure de monobutylétain de 97,0/0,3 à 99,99/0,01, où la teneur du dichlorure de dibutylétain est de 99,99 % en masse ou moins et une teneur du trichlorure de monobutylétain est de 0,01 % en masse ou plus ;
un composé épisulfure ;
un composé polythiol ; et
un catalyseur de polymérisation pour le composé épisulfure.

2. Composition pour matériau optique selon la revendication 1, où le stabilisateur contient du dichlorure de dibutylétain en une quantité d'au moins 97,0 % en masse et au maximum de 99,99 % en masse et du trichlorure de monobutylétain en une quantité de 0,01 % en masse ou plus et 3,0 % en masse ou moins.

3. Composition pour matériau optique selon la revendication 1 ou 2, comprenant en outre un composé polyisocyanate.

4. Composition pour matériau optique selon l'une quelconque des revendications 1 à 3, comprenant en outre du soufre.
